(19) Europäisches Patentamt / European Patent Office / Office européen des brevets

(11) **EP 4 382 581 A1**

(12) **EUROPEAN PATENT APPLICATION**
published in accordance with Art. 153(4) EPC

(43) Date of publication:
**12.06.2024 Bulletin 2024/24**

(21) Application number: **22853014.3**

(22) Date of filing: **01.08.2022**

(51) International Patent Classification (IPC):
*C09J 163/00* (2006.01)  *C09D 7/61* (2018.01)
*C09D 7/63* (2018.01)

(52) Cooperative Patent Classification (CPC):
**C09D 7/61; C09D 7/63; C09J 163/00**

(86) International application number:
**PCT/JP2022/029519**

(87) International publication number:
**WO 2023/013595 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2021 JP 2021127691**

(71) Applicant: **Toyobo Co., Ltd.**
**Kita-ku**
**Osaka-shi, Osaka 530-0001 (JP)**

(72) Inventor: **SHIBA Takuya**
**Otsu-shi, Shiga 520-0292 (JP)**

(74) Representative: **Müller-Boré & Partner**
**Patentanwälte PartG mbB**
**Friedenheimer Brücke 21**
**80639 München (DE)**

(54) **ADHESIVE COMPOSITION AND METHOD FOR PRODUCING ADHESIVE COMPOSITION**

(57) An object is to provide an epoxy-based adhesive having excellent properties such as tensile shear properties with a base material, curability, and heat resistance. An adhesive composition containing an epoxy resin composition (A), a curing catalyst (B), and a thixotropic agent (C), wherein the epoxy resin composition (A) contains a reaction product (c) of an epoxy resin (a) and a compound (b) having a phenolic hydroxy group, wherein an area ratio of the reaction product (c) is more than 2.0%, and 10% or smaller when total of areas of the epoxy resin (a), the compound (b) having a phenolic hydroxy group, and the reaction product (c) is taken as 100% in the area ratio measured by gel permeation chromatography.

EP 4 382 581 A1

**Description**

TECHNICAL FIELD

The present invention relates to an adhesive composition having excellent adhesiveness, curability, and heat resistance. More specifically, the present invention relates to an adhesive composition, for use in structures, for adhering structures of, for example, vehicles such as automobiles.

BACKGROUND ART

Epoxy-based adhesives have excellent mechanical characteristics and excellent characteristics such as water resistance, chemical resistance, and heat resistance, and have been conventionally used in a wide range of fields for paints, molding materials, heat dissipating materials, adhesives, etc. and have been indispensable materials in industry. The epoxy-based adhesive is a thermosetting resin containing an epoxy resin, a curing agent, and a catalyst in general, oxirane rings react with the curing agent by heating, and polyaddition is caused, whereby a cured product is formed. Such a thermosetting resin is known to have excellent mechanical characteristics, corrosion resistance, adhesiveness, and the like as compared with various materials. The epoxy-based adhesive is widely used for joining structures of vehicles such as automobiles and trains, aircraft, and the like because of these characteristics. Such an adhesive is referred to as adhesive for use in structures.

Meanwhile, the epoxy-based adhesive is brittle, and therefore, addition of a modifier, control of a crosslink density of a cured product, and the like have been widely examined. For example, as disclosed in Patent Literature 1, a flexible chain is introduced into a cured product obtained by blending carboxyl group-containing butadiene·acrylonitrile liquid rubber, to enhance toughness.

Furthermore, Non-Patent Literature 1 suggests that an epoxy resin is allowed to have high toughness by appropriately selecting a kind of epoxy and a curing agent and, furthermore, reducing a crosslink density.

CITATION LIST

PATENT LITERATURE

[PTL 1] Japanese Laid-Open Patent Publication No. H5-148337

NON PATENT LITERATURE

[NPL 1] L. D. Bravence et al: 34th International SAMPE Symposium (19)

SUMMARY OF THE INVENTION

PROBLEMS TO BE SOLVED BY THE INVENTION

The method disclosed in Patent Literature 1 allows toughness to be improved by introducing a flexible chain but has a problem that heat resistance is poor. It has been found that, in Non-Patent Literature 1, there is a problem that an epoxy resin composition in which a proportion of low-functionality components is high has reduced curability, and curing does not sufficiently progress even when the process is performed in a predetermined temperature condition, and adhesiveness is reduced. The present invention has been made in view of such a problem of the conventional art. That is, an object of the present invention is to provide an epoxy-based adhesive having excellent adhesiveness with respect to a base material, excellent curability, and excellent heat resistance.

SOLUTIONS TO THE PROBLEMS

The present invention has been made in view of the above problems of the prior art. As a result of extensive investigations, the present inventors have found that the above-mentioned problems can be solved by the following means, and have reached the present invention. That is, the present invention has the following configurations.
[1] An adhesive composition containing an epoxy resin composition (A), a curing catalyst (B), and a thixotropic agent (C),

wherein the epoxy resin composition (A) contains a reaction product (c) of an epoxy resin (a) and a compound (b) having a phenolic hydroxy group,

wherein an area ratio of the reaction product (c) is more than 2.0%, and 10% or smaller when total of areas of the epoxy resin (a), the compound (b) having a phenolic hydroxy group, and the reaction product (c) is taken as 100% in the area ratio measured by gel permeation chromatography.

[2] An adhesive composition containing an epoxy resin composition (A), a curing catalyst (B), and a thixotropic agent (C),

wherein the epoxy resin composition (A) contains a reaction product (c) of an epoxy resin (a) and a compound (b) having a phenolic hydroxy group, and

the adhesive composition has a gel fraction of 90 mass% or more after curing at 170°C for 30 minutes and immersing in tetrahydrofuran at 25°C for one hour.

[3] The adhesive composition according to above [1] or [2], wherein a number-average molecular weight of the reaction product (c) is 1.5 times or more and 5.0 times or smaller to a number-average molecular weight of the epoxy resin (a).

[4] The adhesive composition according to any one of above [1] to [3], wherein a number-average molecular weight of the reaction product (c) is 550 or more and 3,000 or smaller.

[5] The adhesive composition according to any one of above [1] to [4], wherein a number-average molecular weight of the compound (b) having a phenolic hydroxy group is 1,000 or smaller.

[6] The adhesive composition according to any one of above [1] to [5], wherein a number of phenolic hydroxy groups of the compound (b) having a phenolic hydroxy group is 2 per one molecule.

[7] The adhesive composition according to any one of above [1] to [6], wherein the adhesive composition further contains calcium oxide (D).

[8] An adhesive layer obtained by curing the adhesive composition according to any one of above [1] to [7].

[9] A method for producing adhesive composition comprising the steps of:

mixing at least an epoxy resin (a) and a compound (b) having a phenolic hydroxy group and reacting the mixture to obtain an epoxy resin composition (A), and then

mixing at least the epoxy resin composition (A), a curing catalyst (B) and a thixotropic agent (C).

ADVANTAGEOUS EFFECTS OF THE INVENTION

The present invention can provide the adhesive composition having excellent adhesiveness, curability, and heat resistance. Therefore, the adhesive composition of the present invention can be suitably used as an adhesive for use in structures.

DESCRIPTION OF EMBODIMENTS

One embodiment of the present invention will be described below in detail. However, the present invention is not limited to the embodiment, and various modifications can be made within the described range for implementing the present invention. An adhesive composition of the present invention contains an epoxy resin composition (A), a curing catalyst (B), and a thixotropic agent (C), and the epoxy resin composition (A) contains a reaction product (c) of an epoxy resin (a) and a compound (b) having a phenolic hydroxy group.

<Epoxy resin (a)>

The epoxy resin (a) used in the present invention is not particularly limited as long as the epoxy resin (a) is a compound having a bifunctional or higher-functional oxirane ring. Specific examples of the epoxy resin (a) include: bisphenol-type epoxy resins that are glycidyl ethers of bisphenol A, bisphenol F, bisphenol AP, bisphenol AF, bisphenol B, bisphenol BP, bisphenol C, bisphenol E, bisphenol M, bisphenol S, bisphenol P, bisphenol PH, bisphenol Z, and the like, and mixtures obtained by partial condensation thereof; diglycidyl ethers of catechol, resorcinol, hydroquinone, phthalic acid, etc.; glycidyl ether compounds each of which is a glycidyl ether of a compound having two phenolic hydroxy groups in a structure such as naphthalene, biphenyl, tetramethylbiphenyl, bisphenol fluorene, biscresol fluorene, or tetraphenylol ethane, and mixtures obtained by partial condensation thereof; novolac-type epoxy resins that are glycidyl ethers of phenol novolac, cresol novolac, bisphenol A novolac, etc.; glycidyl amine-type epoxy resins that are glycidyl ethers of aniline, o-methylaniline, p-aminophenol, m-phenylenediamine, etc.; polyfunctional epoxy resins such as triglycidyl isocyanurate, triphenyl glycidyl ether methane-type epoxy resins, xylylene-type epoxy resins, tetrakis phenol ethane-type epoxy resins, and naphthalene-type epoxy resins; diglycidyl compounds that are glycidyl ethers of ethylene oxide adducts of bisphenol A, propylene oxide adducts of bisphenol A, etc.; and glycidyl compounds obtained by glycidylating 1,4-butanediol, 1,6-hexanediol, 1,12-dodecanediol, cyclohexanedimethanol, 2,2-dimethylpropanediol, trimethylolpropane, dicyclopentadiene dimethanol, hydrogenated bisphenol A, dimer acid, hexahydrophthalic acid, hexahydroterephthalic acid, polybutadiene, polyisoprene, polybutadiene diol, sorbitol, pentaerythritol, polyglycerol, etc.

Among them, the epoxy resin (a) is preferably a bifunctional epoxy resin, and, in particular, the epoxy resin (a) is preferably the bisphenol-type epoxy resin and particularly preferably a bisphenol A-type epoxy resin or a bisphenol F-type epoxy resin from the viewpoint of mechanical characteristics such as adhesiveness and heat resistance. One kind of the epoxy resin (a) may be used alone, or two or more kinds of them may be used in combination.

The epoxy resin (a) used in the present invention is preferably in the form of a liquid at room temperature. The viscosity of the epoxy resin (a) is preferably 50000 mPa s or smaller, more preferably 30000 mPa·s or smaller, and even more preferably 20000 mPa s or smaller at room temperature. Furthermore, the number-average molecular weight of the epoxy resin (a) is preferably 1,000 or smaller. If the number-average molecular weight is more than 1000, solidification may occur at room temperature, or the viscosity may become high and handleability may be significantly degraded.

<Compound (b) having phenolic hydroxy group>

Examples of the compound (b) having a phenolic hydroxy group as used in the present invention include: bisphenol compounds such as bisphenol A, bisphenol F, and bisphenol E; catechol compounds such as catechol, resorcinol, and methylcatechol; biphenol compounds such as biphenol and tetramethylbiphenol; biscresol compounds such as biscresolfluorene; hydroquinone compounds such as hydroquinone; and novolac compounds such as phenol novolac, cresol novolac, bisphenol A novolac, xylylene novolac, triphenylmethane novolac, biphenyl novolac, dicyclopentadiene phenol novolac, and terpene phenol novolac. Among them, in particular, the bisphenol compounds and the catechol compounds are preferable, the bisphenol compounds are more preferable, and bisphenol A and bisphenol F are particularly preferable from the viewpoint of solubility with respect to the epoxy resin (a) and preferable peel strength. One kind of the compound (b) having a phenolic hydroxy group may be used alone, or two or more kinds of them may be used in combination.

The molecular weight of the compound (b) having a phenolic hydroxy group is preferably 1,000 or smaller. If the molecular weight is more than 1000, solidification may occur at room temperature, or the viscosity may become high and handleability may be significantly degraded. The number of phenolic hydroxy groups of the compound (b) having a phenolic hydroxy group is preferably 2 or more and preferably 4 or smaller, more preferably 3 or smaller, and most preferably 2 from the viewpoint of toughness after curing.

<Reaction product (c)>

The epoxy resin composition (A) used in the present invention contains the reaction product (c) of the epoxy resin (a) and the compound (b) having a phenolic hydroxy group. The number-average molecular weight of the reaction product (c) is preferably 1.5 times or more to the number-average molecular weight of the epoxy resin (a) and more preferably 1.6 times or more to the number-average molecular weight of the epoxy resin (a). In a case where the number-average molecular weight of the reaction product (c) has the above-described value or more, branching is appropriately generated and curability thus becomes good. Meanwhile, the number-average molecular weight of the reaction product (c) is preferably 5.0 times or smaller to the number-average molecular weight of the epoxy resin (a), more preferably 4.0 times or smaller the number-average molecular weight thereof, and even more preferably 3.5 times or smaller the number-average molecular weight thereof. In a case where the number-average molecular weight of the reaction product (c) has the above-described value or smaller, the viscosity is appropriately enhanced, and operability is good. The number-average molecular weight of the reaction product (c) is preferably 550 or more, more preferably 600 or more, and even more preferably 800 or more. The number-average molecular weight of the reaction product (c) is preferably 3,000 or smaller, more preferably 2,000 or smaller, and even more preferably 1,500 or smaller. It is preferable that the number-average molecular weight of the reaction product (c) is within the above-described range since curability, adhesiveness, and heat resistance become good.

Regarding an area ratio measured by gel permeation chromatography, when the total of areas of the epoxy resin (a), the compound (b) having a phenolic hydroxy group, and the reaction product (c) is 100%, the area ratio of the reaction product (c) is more than 2.0%, and 10% or smaller. The area ratio of the reaction product (c) is preferably 3.0% or more and more preferably 4.0% or more, and preferably 9.0% or smaller and more preferably 8.0% or smaller. In a case where the area ratio of the reaction product (c) is within the above-described range, the adhesive composition can have excellent curability, adhesiveness, and heat resistance. Furthermore, the viscosity does not become excessively high, and it is preferable from the viewpoint of operability. Although the reason is not clear, it is inferred that the adhesive composition has excellent curability, adhesiveness, and heat resistance because, although reaction between phenolic hydroxy groups and epoxy resin preferentially progresses in a curing reaction in the presence of a curing catalyst, reaction between a secondary hydroxy group obtained firstly by reaction between the epoxy resin (a) and the compound (b) having a phenolic hydroxy group, and another epoxy resin (a) preferentially progresses in the epoxy resin composition (A), and thus, a compound having a branched structure is generated. The molecular weight peak of the reaction product (c) is preferably higher than the highest molecular weight peak derived from the epoxy resin (a) and the compound (b) having a phenolic hydroxy group by 300 or more. The measurement by gel permeation chromatography can be performed in the condition described in Examples.

<Curing catalyst (B)>

The curing catalyst used in the present invention is not particularly limited as long as the curing catalyst can promote reaction between the epoxy resin (a) and the compound (b) having a phenolic hydroxy group. Specific examples of the curing catalyst are the following compounds and include: urea-based catalysts such as 3-(4-chlorophenyl)-1,1-dimethylurea, 3-(3,4-dichlorophenyl)-1,1-dimethylurea, N,N'-(4-methyl-1,3-phenylene)bis(N',N'-dimethylurea), and N'-[3-[[[(dimethylamino)carbonyl]amino]methyl]-3,5,5-trimethylcyclohexyl]-N,N-dimethylurea; DBU-type amines such as DBU (1,8-diazabicyclo[5.4.0]undecene-7), DBU-phenol salt, DBU-octylic acid salt, DBU-formic acid salt, and DBU-p-toluenesulfonic acid salt; DBN (1,5-diazabicyclo[4.3.0]nonene-5); tertiary amines such as triethylamine, N,N,N',N'-tetramethylethylenediamine, tetramethylguanidine, and triethylenediamine; alcohol amines such as dimethylaminomethanol and dimethylaminoethanol; etheramines such as bis(2-dimethylaminoethyl)ether; tertiary amines, having a phenol group, such as 2,4,6-tris(dimethylaminomethyl)phenol (DMP-30); amine adducts; imidazoles such as 1,2-dimethylimidazole, 2-ethyl-4-methylimidazole, 2-phenylimidazole, 2-phenyl-4-methylimidazole, N-benzyl-2-methylimidazole, N-benzyl-2-phenylimidazole, 2,4-dimethylimidazole, imidazole, 1-methylimidazole, 2-methylimidazole, 2,4-diamino-6-[2'-methylimidazolyl-(1')]-ethyl-s-triazine isocyanuric acid adducts, 2-phenyl-4,5-dihydroxymethylimidazole, 2,4-diamino-6-[2'-methylimidazolyl-(1')]-ethyl-s-triazine, and 1-cyanoethyl-2-phenylimidazoliumtrimellitate; imidazole adducts such as Amicure PN-23, PN-23J, PN-H, PN-31, PN-31J, PN-40, PN-40J, and PN-50 (all of which are manufactured by Ajinomoto Fine-Techno Co., Inc.) and NOVACURE HX-3722, HX-3742, and HX-3792 (all of which are manufactured by Asahi Kasei Corporation); and phosphorus catalysts such as triphenylphosphine, tri-o-tolylphosphine, tri-m-tolylphosphine, tri-p-tolylphosphine, tri-2,4-xylylphosphine, tri-2,5-xylylphosphine, tri-3,5-xylylphosphine, tris(p-methoxyphenyl)phosphine, tris(o-methoxyphenyl)phosphine, a triphenylphosphine-triphenylborane complex, tetraphenylphosphonium tetraphenylborate, tetraphenylphosphonium tetra-p-tolylborate, and tris(2,6-dimethoxyphenyl)phosphine. Among them, the imidazole adducts or the phosphorus catalysts are preferable from the viewpoint of curability, adhesiveness, heat resistance, and latency.

A content of the curing catalyst (B) in the adhesive composition of the present invention is preferably 0.5 to 20 parts by mass, more preferably 0.5 to 10 parts by mass, and even more preferably 0.5 to 8 parts by mass, with respect to 100 parts by mass of the epoxy resin composition (A) from the viewpoint of activity and stability in curing. In a case where the content is the lower limit value or more, curability is enhanced. It is preferable that the usage amount is the upper limit value or smaller since the catalyst effect latency is maintained, and stability of the adhesive composition is preferably maintained.

<Thixotropic agent (C)>

The thixotropic agent (C) used in the present invention is not limited as long as the thixotropic agent (C) is a known thixotropic agent that has an effect of imparting thixotropy to the epoxy-based adhesive. Specific examples of the thixotropic agent (C) include: fumed silica such as hydrophilic fumed silica and hydrophobic fumed silica; particulates such as carbon black and metal powders; and inorganic fillers, such as wollastonite, mica, talc, kaolin, barium sulfate, calcium carbonate, magnesium hydroxide, and clay, having high aspect ratios. Among them, surface-treated fumed silica which is modified with a hydrophobic functional group is preferable from the viewpoint of appropriate thixotropy and high hydrophobicity.

A content of the thixotropic agent (C) in the adhesive composition of the present invention is preferably 0.5 to 20 parts by mass, more preferably 1 to 15 parts by mass, and even more preferably 1 to 10 parts by mass, with respect to 100 parts by mass of the epoxy resin composition (A). It is preferable that the content is within the above-described range since the range of the viscosity during application of the adhesive and curing is appropriately maintained, and operability is good.

<Calcium oxide (D)>

Preferably, the adhesive composition of the present invention also contains calcium oxide (D). In a case where the adhesive composition contains the calcium oxide (D), adhesiveness and heat resistance are enhanced. The calcium oxide used in the present invention is not particularly limited in terms of presence or absence of surface treatment, particle sizes, and the like as long as calcium oxide is a main component.

A content of the calcium oxide (D) in the adhesive composition of the present invention is preferably 0.5 to 10 parts by mass, more preferably 1 to 10 parts by mass, and even more preferably 1.5 to 10 parts by mass, with respect to 100 parts by mass of the epoxy resin composition (A). It is preferable that the usage amount is within the above-described range since mechanical characteristics such as adhesiveness and heat resistance become good.

<Other components>

The adhesive composition of the present invention contains the epoxy resin composition (A), the curing catalyst (B), and the thixotropic agent (C). In addition thereto, a curing agent, an elastomer, core-shell rubber, a coupling agent, an inorganic filler, a spacer, various additives, and the like may be further contained.

The curing agent is used for improving characteristics of the adhesive composition. Examples of the curing agent include: dicyandiamide; hydrazides such as adipic dihydrazide, isophthalic dihydrazide, and dibasic acid dihydrazide; aliphatic amines such as diethylenetriamine, triethylenetetramine, tetraethylenepentamine, trimethylhexamethylenediamine, 2-methylpentamethylenediamine, and diethylaminopropylamine; alicyclic polyamines such as isophoronediamine, 1,3-bis(aminomethyl)cyclohexane, bis(4-aminocyclohexyl)methane, norbornene diamine, 1,2-diaminocyclohexane, and Laromin C-260; polyether-type polyamines such as polyoxypropylenediamine and polyoxypropylenetriamine; polycyclohexylpolyamine mixtures; piperazine-based curing agents such as piperazine and N-aminoethylpiperazine; polyaminoamides such as semicarbazide and cyanoacetamide; polyamideamines obtained by condensation of dimer acid and/or fatty acid, and polyamine; amine-epoxy adducts obtained by reaction between epoxy resin and amine; Michael addition polyamines obtained by reaction between amine and an acryl compound; Mannich reaction products; ketimines; aromatic amines such as melamine, guanamines such as acetoguanamine and benzoguanamine, guanidine, m-xylene diamine, 4,4'-diaminodiphenylmethane, 4,4'-diaminodiphenyl sulfone, and meta-phenylenediamine; acid anhydrides such as tetrahydrophthalic anhydride, hexahydrophthalic anhydride, methyltetrahydrophthalic anhydride, methylhexahydrophthalic acid, benzophenonetetracarboxylic dianhydride, pyromellitic dianhydride, trimellitic anhydride, methylnadic acid, hydrogenated methylnadic anhydride, dodecenyl succinic anhydride, succinic anhydride, phthalic anhydride, aliphatic dibasic acid polyanhydride, and ethylene glycol bisanhydro trimellitate; and active esters of boron trifluoride complex compounds, boron trichloride complex compounds, sulfonium salts, onium salts, and polyvalent carboxylic acid. Among them, dicyandiamide is preferable from the viewpoint of latency.

As the usage amount of the curing agent, a proportion of active hydrogen groups to epoxy groups is preferably in a range of 0.9 to 1.1. Within the above-described range, reaction between epoxy groups and active hydrogen groups is caused in a well-balanced manner, and curability can be sufficiently exhibited.

The elastomer is used for modifying the adhesive composition. Examples of the elastomer include: epoxy resins modified with rubber such as NBR, SBR, polybutadiene, and terminal carboxylic acid-modified acrylonitrile-butadiene; ADEKA RESIN EPR series (manufactured by ADEKA CORPORATION), Hypox series such as Hypox RA840 and RA1340 (manufactured by CVC), and the like; urethane-modified epoxy resins having a urethane bond in the molecule and also having two or more oxirane rings; ADEKA RESIN EPR series such as ADEKA RESIN EPR1630 and Hypox series such as Hypox UA10 (manufactured by CVC) although they are not particularly limited as long as the above-described composition is contained; liquid rubber such as NBR, SBR, and polybutadiene; silicone resins; particulates of crosslinked rubber such as crosslinked NBR and crosslinked BR; urethane rubber; terminal carboxylic acid-type and terminal amino-type acrylonitrile-butadiene rubbers (CTBN, ATBN); NBR rubber having carboxylic acid at the main chain; terminal carboxylic acid-type polybutadiene; liquid polysulfide; various urethane prepolymers; and particulates of engineering plastic resin such as polyethersulfone, polyamide, polyetherimide, acryl, polyester, and polycarbonate. One of them may be used alone, or two or more of them may be used in combination.

The core-shell rubber represents particles each having a layer structure of at least two layers that are a core layer formed of a rubber component, and a hard shell layer. In a case where the core-shell rubber is contained, enhancement of toughness such as peel strength can be expected. The core-shell rubber is used for modifying adhesives and provisionally fixing a component in which physical crosslinking is used. Examples of the core-shell rubber include Kane Ace MX153, MX154, MX-257, MX-960, MX-136, MX-217 (all of which are manufactured by KANEKA CORPORATION), and GANZPEARL (manufactured by Aica Kogyo Company, Limited).

A rubber-like substance is used as the core layer, and the core layer is formed of, for example, a polymer obtained by polymerization of conjugated diene such as polybutadiene and/or a lower alkyl acrylate, a polymer obtained by copolymerization with monomers that can be copolymerized with the above-described polymer, and polysiloxane rubber. The core layer is preferably a substance having a glass transition temperature of -20°C or lower, from the viewpoint of improvement of impact resistance at low temperatures, and enhancement of peel strength.

The shell layer is preferably a component that has high affinity to epoxy resin and does not exhibit rubber elasticity. Although the shell layer is not particularly limited as long as the shell layer is such a component, the shell layer is preferably formed of a polymer obtained by polymerization of methyl methacrylate and/or styrene monomers, or a polymer obtained by copolymerization with monomers that can be copolymerized with the above-described polymer from the viewpoint of graft polymerizability and affinity to epoxy resin. The shell layer is preferably a substance having a glass transition temperature of 50°C or higher from the viewpoint of adhesiveness.

The coupling agent is used for improving adhesion to a base material, a filler, resin, and the like. Examples of the coupling agent include silane coupling agents such as vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, (3-glycidoxypropyl)methyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, tris-(trimethoxysilylpropyl)isocyanurate, 3-mercaptopropylmethyldimethoxysilane, 3-mercaptopropyltrimethoxysilane, 3-isocyanatopropyltriethoxysilane, and [3-(trimethoxysilyl)propyl]succinic anhydride.

The inorganic filler is used in order to, for example, enhance filling and mechanical properties. Examples of the inorganic filler include wollastonite, mica, talc, kaolin, barium sulfate, calcium carbonate, magnesium hydroxide, clay, calcium silicate, aluminum silicate, calcium hydroxide, magnesium hydroxide, aluminum hydroxide, magnesium carbonate, barium carbonate, syenite, chlorite, bentonite, montmorillonite, barite, dolomite, quartz, glass, feldspar, diatomaceous earth, mica, kaolin, alumina, graphite, fibers such as carbon fibers and glass fibers, silica such as crystalline silica, amorphous silica, fused silica, fumed silica, sintered silica, precipitated silica, and ground silica (silica fine powder), iron oxide, zinc oxide, titanium oxide, barium oxide, titanium dioxide, hollow glass beads, and hollow polymer beads. One of them may be used alone, or two or more of them may be used in combination.

The spacer is used for adjusting the thickness of an adherend. Examples of the spacer include glass beads, fibers, resin beads, and an inorganic filler having predetermined or more hardness and particle sizes. One of these may be used alone, or two or more of them may be used in combination.

The particle diameter of the spacer is preferably 1 to 200 $\mu$m and more preferably 10 to 150 $\mu$m from the viewpoint of controlling the thickness of an adherend and stress on the adherend.

The spacer is in the form of, for example, spherical particles or fiber-like particles. Among them, spherical particles are preferable since the particle diameters are easily controlled.

When the spacer is used, an amount of the spacer to be used is preferably 0.2 to 1.5 parts by mass and more preferably 0.5 to 1 part by mass with respect to 100 parts by mass of the epoxy resin composition (A).

Examples of the various additives that may be blended include a plasticizer, a reactive diluent, a storage stabilizer, an anti-aging agent, an antioxidant, a pigment, a dye, a colorant, a coupling agent, a leveling agent, an adhesion imparting agent, a flame retardant, an antistatic agent, a conductivity imparting agent, a lubricant, a slidability imparting agent, an ultraviolet absorber, a surfactant, a dispersant, a dispersion stabilizer, a defoamer, a dehydrating agent, a crosslinking agent, a rust inhibitor, and a solvent.

<Adhesive composition>

The adhesive composition of the present invention contains the epoxy resin composition (A), the curing catalyst (B), and the thixotropic agent (C), and the epoxy resin composition (A) contains the reaction product (c) of the epoxy resin (a) and the compound (b) having a phenolic hydroxy group. The above-described other components may be contained.

The adhesive composition of the present invention preferably has a gel fraction of 90 mass% or more after curing at 170°C for 30 minutes and immersing in tetrahydrofuran for one hour. The gel fraction is more preferably 95 mass% or more and even more preferably 97 mass% or more. In a case where the adhesive composition of the present invention has a gel fraction indicating the above-described value or more, the adhesive composition can have excellent curability, and excellent adhesiveness and heat resistance. The gel fraction can be adjusted and enhanced by selecting the number-average molecular weight of the reaction product (c), the area ratio thereof in the epoxy resin composition (A), and the curing catalyst.

<Method for producing adhesive composition>

The adhesive composition of the present invention can be produced by mixing the above-described components. Examples of the mixing method include methods using a disperser, a double planetary mixer, a rotary-and-revolutionary mixer, a homogenizer, a three-roll mill, a kneading machine, a kneader, etc.

<Method for applying adhesive composition>

Examples of a method for applying the adhesive composition of the present invention include a method in which the adhesive composition which is filled in a syringe or the like is applied by a dispenser, and a method using a spray, a gun, brush coating, etc. In this process, the temperature at which the adhesive composition is applied is preferably 30 to 60°C. The temperature at which the adhesive composition is cured is preferably 120 to 220°C and more preferably 140 to 200°C. The curing time is preferably 20 to 120 minutes, more preferably 30 to 90 minutes, and even more preferably 30 to 60 minutes.

<Method for producing laminate>

The laminate of the present invention is formed of an adhesive layer obtained by disposing and curing the adhesive composition between a base material 1 and a base material 2. Each of the base material 1 and the base material 2 is formed of, for example: a metal such as iron, aluminum, or steel; fiber-reinforced plastic such as CFRP or GFRP; engineering plastic resin such as polyethylene terephthalate (PET), polybutylene terephthalate (PBT), polycarbonate (PC), polyimide (PI), or polyamide (PA); and glass.

EXAMPLES

The present invention will be specifically described below by way of examples. However, the present invention is not limited to the examples. Each of the measurement items was measured according to the following method.

<Tensile shear strength>

The following base material which was degreased by using acetone, was used as an adherend, and a test piece was prepared and measured in accordance with JIS K6850:1999. The tensile rate was 10 mm/min. The adhesive composition was applied such that the thickness of the adhesive layer was 0.1 mm, and was cured at 170°C for 30 minutes, and thus, the test piece was prepared. For the test piece, the tensile shear strength level of 20 MPa or more was evaluated as good, and the tensile shear strength level of smaller than 20 MPa was evaluated as poor.
Base material: SPCC-SD (cold rolled steel sheet) (1.6 mm×25 mm×100 mm, manufactured by Engineering Test Piece Company)

<T-Peel (T-peel strength)>

The following base material which was degreased by using acetone, was used as an adherend, and a test piece was prepared and measured in accordance with JIS K6854-3:1999. The tensile rate was 10 mm/min. The adhesive composition was applied such that the thickness of the adhesive layer was 0.1 mm, and was cured at 170°C for 30 minutes, and thus, the test piece was prepared. For the test piece, the T-Peel level of 75 N/25 mm or more was evaluated as good, and the T-Peel level of smaller than 75 N/25 mm was evaluated as poor.
Base material: SPCC-SD (cold rolled steel sheet) (0.5 mm×25 mm×200 mm, manufactured by Engineering Test Piece Company)

<Gel fraction>

The adhesive composition which was cured at 170°C for 30 minutes was cut into a strip-like shape having a length dimension of 2.5 cm, a transverse dimension of 5 cm, and a thickness of 0.1 mm, and the weight was measured (this weight was defined as A), and the strip-shaped adhesive composition was immersed in 100 mL of tetrahydrofuran at 25°C for one hour. The strip-shaped cured adhesive composition was taken out and dried by a hot air dryer at 100°C for one hour, and the weight was measured (this weight was defined as B). The value calculated according to the following equation was set as a gel fraction (%). The gel fraction level of 90% or more was evaluated as good, and the gel fraction level of smaller than 90% was evaluated as poor.

$$\text{Gel fraction (\%)} = B/A \times 100$$

<Heat resistance>

Measurement was performed by a dynamic viscoelasticity measurement device (DVA-220, manufactured by IT Keisoku Seigyo K. K.). The adhesive composition which was cured at 170°C for 30 minutes was cut into a strip-like shape, and measured at a frequency of 10 Hz and a temperature increase rate of 4°C/min, and the dynamic viscoelasticity of the adhesive composition was measured. In the measurement, the level at which the coating was maintained at 250°C was evaluated as good, and the level at which the coating was stretched at 250°C and the measurement was not able to be performed was evaluated as poor.

<Number-average molecular weight (Mn)>

A sample (epoxy resin composition (A)) was dissolved or diluted in tetrahydrofuran such that the concentration of the sample was about 0.5 mass%, and the obtained product was filtered through a membrane filter that was formed of polytetrafluoroethylene and that had a hole diameter of 0.5 $\mu$m, to obtain a measurement sample. The number-average molecular weight was measured by gel permeation chromatography in which tetrahydrofuran was a mobile phase, and a differential refractometer was a detector. The flow rate was 1 mL/minute, and the column temperature was 30°C. KF-802, 804L, and 806L manufactured by Showa Denko K.K. were used as the columns. Monodisperse polystyrene was used as the molecular weight standard. In a case where the sample was not dissolved in tetrahydrofuran, N,N-dimethylformamide was used instead of tetrahydrofuran.

<Preparation of epoxy resin composition (A1)>

In a reaction vessel having a stirrer, a thermometer, and a cooling tube, 50 parts by mass of jER807, 53 parts by mass of jER828, and 64 parts by mass of bisphenol A were put and gradually heated to 150°C to cause a reaction. It was confirmed that the number-average molecular weight peak of 600 or more was generated in GPC, and a reaction product (c1) was generated. The reaction was ended when the area ratio of the reaction product (c1) at the peak became 2.0%, and an epoxy resin composition (A1) was obtained. The number-average molecular weight of the reaction product (c1) contained in the obtained epoxy resin composition (A1) was 960, a molecular weight ratio of the reaction product (c1)/the epoxy resin (a) was 1.8, and the molecular weight ratio GPC area ratio was 4.8%.

<Preparation of epoxy resin composition (A2)>

In a reaction vessel having a stirrer, a thermometer, and a cooling tube, 105 parts by mass of jER828, and 62 parts by mass of bisphenol A were put and gradually heated to 150°C to cause a reaction. It was confirmed that the number-average molecular weight peak of 600 or more was generated in GPC, and a reaction product (c2) was generated. The reaction was ended when the area ratio of the reaction product (c2) at the peak became 2.0%, and an epoxy resin composition (A2) was obtained. The number-average molecular weight of the reaction product (c2) contained in the obtained epoxy resin composition (A2) was 940, a molecular weight ratio of the reaction product (c2)/the epoxy resin (a) was 1.7, and the molecular weight ratio GPC area ratio was 4.9%.

<Preparation of epoxy resin composition (A3)>

In a reaction vessel having a stirrer, a thermometer, and a cooling tube, 105 parts by mass of jER828, and 62 parts by mass of bisphenol A were put and gradually heated to 140°C to cause a reaction. It was confirmed that the number-average molecular weight peak of 600 or more was generated in GPC, and a reaction product (c3) was generated. The reaction was ended when the area ratio of the reaction product (c3) at the peak became 2.0%, and an epoxy resin composition (A3) was obtained. The number-average molecular weight of the reaction product (c3) contained in the obtained epoxy resin composition (A3) was 1000, a molecular weight ratio of the reaction product (c3)/the epoxy resin (a) was 1.9, and the molecular weight ratio GPC area ratio was 2.3%.

<Preparation of epoxy resin composition (A4)>

In a reaction vessel having a stirrer, a thermometer, and a cooling tube, 90 parts by mass of YDF8170C, and 62 parts by mass of bisphenol A were put and gradually heated to 150°C to cause a reaction. It was confirmed that the number-average molecular weight peak of 600 or more was generated in GPC, and a reaction product (c4) was generated. The reaction was ended when the area ratio of the reaction product (c4) at the peak became 2.0%, and an epoxy resin composition (A4) was obtained. The number-average molecular weight of the reaction product (c4) contained in the obtained epoxy resin composition (A4) was 600, a molecular weight ratio of the reaction product (c4)/the epoxy resin (a) was 2.2, and the molecular weight ratio GPC area ratio was 5.4%.

<Preparation of epoxy resin composition (A5)>

In a reaction vessel having a stirrer, a thermometer, and a cooling tube, 77 parts by mass of YDF8170C, and 62 parts by mass of bisphenol A were put and gradually heated to 150°C to cause a reaction. It was confirmed that the number-average molecular weight peak of 600 or more was generated in GPC, and a reaction product (c5) was generated. The reaction was ended when the area ratio of the reaction product (c5) at the peak became 2.0%, and an epoxy resin composition (A5) was obtained. The number-average molecular weight of the reaction product (c5) contained in the obtained epoxy resin composition (A5) was 600, a molecular weight ratio of the reaction product (c5)/the epoxy resin (a) was 2.2, and the molecular weight ratio GPC area ratio was 4.9%.

<Preparation of epoxy resin composition (A6)>

In a reaction vessel having a stirrer, a thermometer, and a cooling tube, 50 parts by mass of jER807, 53 parts by mass of jER828, and 64 parts by mass of bisphenol A were put and gradually heated to 130°C to cause a reaction. It was confirmed that the number-average molecular weight peak of 600 or more was generated in GPC, and a reaction product (c6) was generated. The reaction was ended when the area ratio of the reaction product (c6) at the peak became 2.0%, and an epoxy resin composition (A6) was obtained. The number-average molecular weight of the reaction product (c6) contained in the obtained epoxy resin composition (A1) was 830, a molecular weight ratio of the reaction product (c6)/the epoxy resin (a) was 1.5, and the molecular weight ratio GPC area ratio was 0.5%.

<Preparation of epoxy resin composition (A7)>

In a reaction vessel having a stirrer, a thermometer, and a cooling tube, 50 parts by mass of jER807, 53 parts by mass of jER828, and 64 parts by mass of bisphenol A were put and gradually heated to 150°C to cause a reaction. It was confirmed that the number-average molecular weight peak of 600 or more was generated in GPC, and a reaction product (c7) was generated. The reaction was ended when the area ratio of the reaction product (c7) at the peak became 2.0%, and an epoxy resin composition (A7) was obtained. The number-average molecular weight of the reaction product (c7) contained in the obtained epoxy resin composition (A7) was 830, a molecular weight ratio of the reaction product (c7)/the epoxy resin (a) was 1.5, and the molecular weight ratio GPC area ratio was 2.0%.

<Preparation of epoxy resin composition (A8)>

In a reaction vessel having a stirrer, a thermometer, and a cooling tube, 45 parts by mass of jER807, 43 parts by mass of jER828, and 62 parts by mass of bisphenol A were put and gradually heated to 150°C to cause a reaction. It was confirmed that the number-average molecular weight peak of 600 or more was generated in GPC, and a reaction product (c8) was generated. The reaction was ended when the area ratio of the reaction product (c8) at the peak became 2.0%, and an epoxy resin composition (A8) was obtained. The number-average molecular weight of the reaction product (c8) contained in the obtained epoxy resin composition (A8) was 830, a molecular weight ratio of the reaction product (c8)/the epoxy resin (a) was 1.5, and the molecular weight ratio GPC area ratio was 2.0%.

<Preparation of epoxy resin composition (A9)>

In a reaction vessel having a stirrer, a thermometer, and a cooling tube, 105 parts by mass of jER828, and 62 parts by mass of bisphenol A were put and gradually heated to 150°C to cause a reaction. It was confirmed that the number-average molecular weight peak of 600 or more was generated in GPC, and a reaction product (c9) was generated. The reaction was ended when the area ratio of the reaction product (c9) at the peak became 2.0%, and an epoxy resin composition (A9) was obtained. The number-average molecular weight of the reaction product (c9) contained in the obtained epoxy resin composition (A9) was 930, a molecular weight ratio of the reaction product (c9)/the epoxy resin (a) was 1.7, and the molecular weight ratio GPC area ratio was 0.8%.

<Preparation of epoxy resin composition (A10)>

In a reaction vessel having a stirrer, a thermometer, and a cooling tube, 90 parts by mass of YDF8170C, and 55 parts by mass of bisphenol A were put and gradually heated to 130°C to cause a reaction. It was confirmed that the number-average molecular weight peak of 550 or more was generated in GPC, and a reaction product (c10) was generated. The reaction was ended when the area ratio of the reaction product (c10) at the peak became 2.0%, and an epoxy resin composition (A10) was obtained. The number-average molecular weight of the reaction product (c10) contained in the obtained epoxy resin composition (A10) was 560, a molecular weight ratio of the reaction product (c10)/the epoxy resin (a) was 3.1, and the molecular weight ratio GPC area ratio was 2.5%.

<Example 1>

By a rotary-and-revolutionary mixer, 100 parts by mass of the epoxy resin composition (A1), 1.8 parts by mass of HX3742 as the catalyst (B), 1.8 parts by mass of AEROSIL R805 as the thixotropic agent (C), and 1.8 parts by mass of the calcium oxide (D) were mixed to obtain an adhesive composition 1. The obtained adhesive composition 1 was evaluated for tensile shear, T-Peel, storage elastic modulus, and gel fraction. Table 1 indicates the results.

<Examples 2 to 7, Comparative examples 1 to 5>

Adhesive compositions 2 to 12 were prepared in the same method as in Example 1 except that the blending compositions of the adhesive compositions were changed as indicated in Table 1. Each of the obtained adhesive compositions was evaluated for tensile shear, T-Peel, storage elastic modulus, and gel fraction. Table 1 indicates the results.

[Table 1]

| Blending | | Blending amount (parts by mass) | | | | | | | | | | | |
|---|---|---|---|---|---|---|---|---|---|---|---|---|---|
| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
| Adhesive composition | | 1 | 2 | 3 | 4 | 5 | 6 | 7 | 8 | 9 | 10 | 11 | 12 |
| Epoxy resin composition (A) | Epoxy resin composition (A1) | 100 | | | | | | | | | | | |
| | Epoxy resin composition (A2) | | 100 | | 100 | | | | | | | | |
| | Epoxy resin composition (A3) | | | 100 | | | | | | | | | |
| | Epoxy resin composition (A4) | | | | | 100 | | | | | | | |
| | Epoxy resin composition (A5) | | | | | | 100 | | | | | | |
| | Epoxy resin composition (A6) | | | | | | | | 100 | | | | |
| | Epoxy resin composition (A7) | | | | | | | | | 100 | | | |
| | Epoxy resin composition (A8) | | | | | | | | | | 100 | 100 | |
| | Epoxy resin composition (A9) | | | | | | | | | | | | 100 |
| | Epoxy resin composition (A10) | | | | | | | 100 | | | | | |
| Catalyst (B) | HX3742 | 1.8 | | 1.8 | 1.8 | 2.0 | 2.2 | 2.1 | 1.8 | 1.8 | 2.0 | 2.0 | |
| | TOTP | | 2.4 | | | | | | | | | | 2.4 |
| Thixotropic agent (C) | AEROSIL R805 | 1.8 | 1.8 | 1.8 | 1.8 | 2.0 | 2.2 | 2.1 | 1.8 | 1.8 | 2.0 | 2.0 | 1.8 |
| Calcium oxide (D) | CML #35 | 1.8 | | 1.8 | 1.8 | 2.0 | 2.2 | 2.1 | 1.8 | 1.8 | 2.0 | 2.0 | |
| Epoxy resin | jER630 | | | | | | | | | | 4.4 | | |
| | TETRAD-X | | | | | | | | | | | 2.9 | |

(continued)

| Blending | | Blending amount (parts by mass) | | | | | | | | | | | |
|---|---|---|---|---|---|---|---|---|---|---|---|---|---|
| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
| Modifier | MX154 | | | | | | 16.5 | | | | | | |
| GPC measurement of epoxy resin composition (A) | Reaction product (c) | (c1) | (c2) | (c3) | (c2) | (c4) | (c5) | (c10) | (c6) | (c7) | (c8) | (c8) | (c9) |
| | Number-average molecular weight of reaction product (c) | 960 | 940 | 1000 | 940 | 600 | 600 | 560 | 830 | 830 | 830 | 830 | 930 |
| | Molecular weight ratio of reaction product (c)/ epoxy resin (a) | 1.8 | 1.7 | 1.9 | 1.7 | 2.2 | 2.2 | 3.1 | 1.5 | 1.5 | 1.5 | 1.5 | 1.7 |
| | GPC area ratio (%) of reaction product (c) | 4.8 | 4.9 | 2.3 | 4.9 | 5.4 | 4.9 | 2.5 | 0.5 | 2.0 | 2.0 | 2.0 | 0.8 |
| Evaluation item | Tensile shear strength (MPa) | good | good | good | good | good | good | good | poor | poor | poor | good | good |
| | | 20 | 28 | 32 | 32 | 27 | 36 | 25 | 11 | 19 | 19 | 24 | 26 |
| | T-Peel (N/mm) | good | good | good | good | good | good | good | poor | poor | poor | poor | good |
| | | 75 | 120 | 85 | 80 | 100 | 150 | 135 | 5 | 45 | 50 | 25 | 80 |
| | Heat resistance | good | good | good | good | good | good | good | good | good | good | good | poor |
| | Gel fraction (%) | good | good | good | good | good | good | good | poor | poor | poor | poor | poor |
| | | 91 | 95 | 99 | 97 | 98 | 99 | 90 | 53 | 74 | 78 | 85 | 60 |

EP 4 382 581 A1

13

<Materials>

The materials indicated in Table 1 were as follows.

jER-807: bisphenol F-type epoxy resin, manufactured by Mitsubishi Chemical Corporation, Mn of 461
jER-828: bisphenol A-type epoxy resin, manufactured by Mitsubishi Chemical Corporation, Mn of 550
YDF-8170C: bisphenol F-type epoxy resin, manufactured by NIPPON STEEL Chemical & Material Co., Ltd., Mn of 220
jER-630: trifunctional glycidyl amine-type epoxy resin, manufactured by Mitsubishi Chemical Corporation, molecular weight of 277
TETRAD-X: tetrafunctional glycidyl amine-type epoxy resin, manufactured by MITSUBISHI GAS CHEMICAL COMPANY, INC., molecular weight of 360
MX154: bisphenol A-type epoxy resin containing 40 parts by mass of core-shell rubber, manufactured by KANEKA CORPORATION
Bisphenol A: manufactured by Mitsubishi Chemical Corporation
Bisphenol F: manufactured by Gun Ei Chemical Industry Co., Ltd.
HX3742: imidazole adduct-type catalyst, manufactured by Asahi Kasei Corporation
TOTP: tri-o-tolylphosphine, manufactured by Tokyo Chemical Industry Co., Ltd.
AEROSIL R805: hydrophobic fumed silica, manufactured by NIPPON AEROSIL CO., LTD. CML #35: calcium oxide, manufactured by Ohmi Chemical Industry Co., Ltd.

Example 1 and Comparative examples 1 and 2 indicate that, in a case where the reaction product (c) was contained in the epoxy resin composition in an amount of more than 2.0%, curability was improved and the characteristics were improved. Comparative examples 3 and 4 indicate that improvement of the characteristics was insufficient even if a trifunctional or tetrafunctional-type epoxy was merely added. Examples 2 to 4 indicate that, even in a case where a kind of a catalyst was changed with the base being bisphenol A-type epoxy, when the compound (c) was contained in an amount of more than 2.0%, curability was improved. Meanwhile, Comparative example 5 indicates that, in a case where the GPC area ratio of the reaction product (c) was 2.0% or smaller, there was a problem with heat resistance. Examples 5 and 6 indicate that, in a case where the bisphenol F-type epoxy was used and the reaction product (c) was contained in an amount of more than 2.0%, the characteristics were improved, and there was no problem even when the modifier was contained.

INDUSTRIAL APPLICABILITY

The epoxy composition used in the present invention is useful as an adhesive, and such an adhesive can be suitably used as an adhesive having excellent adhesiveness, curability, heat resistance, etc. Particularly, such an adhesive is useful as an adhesive for use in structures, and is thus expected to make a large contribution to industries.

**Claims**

1. An adhesive composition comprising:

   an epoxy resin composition (A), a curing catalyst (B), and a thixotropic agent (C),
   wherein the epoxy resin composition (A) contains a reaction product (c) of an epoxy resin (a) and a compound (b) having a phenolic hydroxy group,
   wherein an area ratio of the reaction product (c) is more than 2.0%, and 10% or smaller when total of areas of the epoxy resin (a), the compound (b) having a phenolic hydroxy group, and the reaction product (c) is taken as 100% in the area ratio measured by gel permeation chromatography.

2. An adhesive composition comprising:

   an epoxy resin composition (A), a curing catalyst (B), and a thixotropic agent (C),
   wherein the epoxy resin composition (A) contains a reaction product (c) of an epoxy resin (a) and a compound (b) having a phenolic hydroxy group, and
   the adhesive composition has a gel fraction of 90 mass% or more after curing at 170°C for 30 minutes and immersing in tetrahydrofuran at 25°C for one hour.

3. The adhesive composition according to claim 1 or 2, wherein
a number-average molecular weight of the reaction product (c) is 1.5 times or more and 5.0 times or smaller to a number-average molecular weight of the epoxy resin (a).

4. The adhesive composition according to claim 1 or 2, wherein
a number-average molecular weight of the reaction product (c) is 550 or more and 3,000 or smaller.

5. The adhesive composition according to claim 1 or 2, wherein
a number-average molecular weight of the compound (b) having a phenolic hydroxy group is 1,000 or smaller.

6. The adhesive composition according to claim 1 or 2, wherein
a number of phenolic hydroxy groups of the compound (b) having a phenolic hydroxy group is 2 per one molecule.

7. The adhesive composition according to claim 1 or 2, wherein
the adhesive composition further contains calcium oxide (D).

8. A laminate body comprising:
An adhesive layer obtained by curing the adhesive composition according to claim 1 or 2.

9. A method for producing adhesive composition comprising the steps of:

mixing at least an epoxy resin (a) and a compound (b) having a phenolic hydroxy group and reacting the mixture to obtain an epoxy resin composition (A), and then
mixing at least the epoxy resin composition (A), a curing catalyst (B) and a thixotropic agent (C).

## INTERNATIONAL SEARCH REPORT

| International application No. |
|---|
| **PCT/JP2022/029519** |

**A.    CLASSIFICATION OF SUBJECT MATTER**

**C09J 163/00**(2006.01)i; **C09D 7/61**(2018.01)i; **C09D 7/63**(2018.01)i
FI:    C09J163/00; C09D7/61; C09D7/63

According to International Patent Classification (IPC) or to both national classification and IPC

**B.    FIELDS SEARCHED**

Minimum documentation searched (classification system followed by classification symbols)

C09J163/00; C09D7/61; C09D7/63

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2006-63227 A (SAKAMOTO YAKUHIN KOGYO CO., LTD.) 09 March 2006 (2006-03-09) claim 1, paragraphs 7-29, examples 1-4 | 2, 4-6, 8-9 |
| A | | 1, 3, 7 |
| Y | JP 2015-187271 A (TOYOBO CO., LTD.) 29 October 2015 (2015-10-29) claim 1, paragraph 46 | 2, 4-6, 8-9 |
| A | | 1, 3, 7 |
| Y | JP 2013-108011 A (MITSUBISHI CHEMICAL CORP.) 06 June 2013 (2013-06-06) claims 1-10, paragraphs 1-7, 16-45, 59-70, examples | 2, 5-6, 8-9 |
| A | | 1, 3-4, 7 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 October 2022** | **25 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/029519**

| Patent document cited in search report | | | Publication date (day/month/year) | Patent family member(s) | | | Publication date (day/month/year) |
|---|---|---|---|---|---|---|---|
| JP | 2006-63227 | A | 09 March 2006 | (Family: none) | | | |
| JP | 2015-187271 | A | 29 October 2015 | WO | 2010/074135 | A1 | |
| | | | | TW | 201033314 | A | |
| | | | | KR | 10-2011-0099763 | A | |
| | | | | CN | 102264855 | A | |
| JP | 2013-108011 | A | 06 June 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5148337 A

**Non-patent literature cited in the description**

- **L. D. BRAVENCE et al.** *34th International SAMPE Symposium*